# EUROPEAN PATENT SPECIFICATION

(11) **EP 0 444 571 B1**
(45) Date of publication and mention of the grant of the patent: **24.04.1996**
(21) Application number: 91102731.6
(22) Date of filing: 25.02.1991
(51) Int. Cl.: G11B 5/86

(54) **Magnetic transfer system**
Magnetisches Übertragungssystem
Système de transmission magnétique

(30) Priority: 26.02.1990 JP 42664/90
(43) Date of publication of application: 04.09.1991
(73) Proprietor: SONY CORPORATION, Tokyo (JP)
(72) Inventor: Noda, Makoto, c/o Sony Magnetic Products, Inc., Shingawa-ku, Tokyo (JP); Okazaki, Yutaka, c/o Sony Magnetic Products, Inc., Shingawa-ku, Tokyo (JP); Chiba, Kazunobu, c/o Sony Magnetic Products, Inc., Shingawa-ku, Tokyo (JP)
(74) Representative: ter Meer, Nicolaus, Dipl.-Chem., Dr.

(56) References cited:
- EP-A- 0 276 127
- PATENT ABSTRACTS OF JAPAN, unexamined applications, P field, vol. 5, no. 69, May 9, 1981, THE PATENT OFFICE JAPANESE GOVERNMENT page 19 P 60
- PATENT ABSTRACTS OF JAPAN, unexamined applications, P field, vol. 5, no. 69, May 9, 1981, THE PATENT OFFICE JAPANESE GOVERNMENT page 20 P 60

## Description

### BACKGROUND OF THE INVENTION

### Field of The Invention

This invention relates to the art of magnetic recording and more particularly, to a magnetic transfer system wherein record signals recorded on a master medium is magnetically transferred to a slave medium.

### Description of the Prior Art

As a method or system for duplicating magnetic recording mediums in which video or audio signals have been recorded, for example, there is known a so-called contact type magnetic transfer system wherein a slave medium is superposed with a master medium in such a way that the magnetic layers of the mediums are in intimate contact with each other. In this condition, a bias magnetic field is applied from outside, and the magnetic record on the master medium is transferred to the slave medium.

In this magnetic transfer system, the master medium used is a magnetic metal powder coated tape (i.e. a so-called metal tape) whose coercive force along the length of the tape is approximately 2000 (Oe). The slave medium used is an iron oxide-coated tape (Co-deposited γ -Fe₂O₃ tape) whose coercive force along the length thereof is approximately 700 (Oe).

For instance, the combination of the metal tape used as the master tape and the Co-deposited γ -Fe₂O₃ tape used as the slave tape has been already applied in mass production of so-called soft tapes in video tapes.

The magnetic transfer technique of the type described above may be applied to various fields of magnetic recording and have now been applied for reproduction of soft tapes, for example, in systems requiring high density recording such as so-called 8 mm VTR and digital audio tape recorders.

However, as a result of extensive studies made by us, it has been found that when such techniques are applied for magnetic transfer of high density recording mediums such as 8 mm wide video tapes or digital audio tapes by using a combination of a metal tape and a Co-deposited γ -Fe₂O₃ tape, the transfer output in a short wavelength range is unsatisfactory.

The transfer output is slightly improved when using a barium ferrite-coated tape as the slave medium but such an improvement is not yet satisfactory.

Although it may occur that a vacuum deposited tape using a metal magnetic thin film as a magnetic layer of the master medium, another problem arises in that an error rate increases such as by phase shift especially when digital signals are transferred. This is because the magnetic layer of the vacuum deposited tape is obliquely deposited wherein columnar structures are inclined in one direction.

### SUMMARY OF THE INVENTION

It is accordingly an object of the invention to provide a magnetic transfer system which overcomes the drawbacks involved in the prior art systems and which exhibits a good transfer and reproduction output with a reduced error rate.

It is another object of the invention to provide a magnetic transfer system which comprises a master medium whose recording layer is made of a plurality of metal magnetic thin films formed by vacuum deposition and each having a columnar structure in combination with a slave medium having a magnetic layer of a hexagonal system ferrite powder whereby a good transfer and reproduction output can be achieved in a short wavelength range with a reduced error rate.

According to the present invention, there is provided a magnetic transfer system for duplicating magnetic tape recording mediums which comprises, in combination, a master medium which has been magnetically encoded with record signals and which includes a nonmagnetic support and a metal magnetic thin film formed on the nonmagnetic support by vacuum deposition of a magnetic metal material, and a slave medium which includes a nonmagnetic nonmagnetic support and a magnetic film formed on the nonmagnetic support and comprised of a hexagonal system magnetic ferrite powder, characterized in that said metal magnetic thin film includes a plurality of metal magnetic thin films (2, 3) which have been so formed in such a way that columnar structures of any adjacent metal magnetic thin films are inclined in opposite directions.

### BRIEF DESCRIPTION OF THE DRAWINGS

Fig. 1 is a schematic sectional view of an essential part of a master medium used according to the present invention;
Fig. 2 is a schematic sectional view of an essential part of a two-layered master medium having metal magnetic thin films whose columnar structures are inclined in the same direction;
and Fig. 3 is a schematic sectional view of an essential part of a master medium having a single-layered metal magnetic thin film.

### DETAILED DESCRIPTION AND EMBODIMENTS OF THE INVENTION

In the practice of the invention, the magnetic transfer system comprises a master medium which has been recorded with magnetic signals and a slave medium to which the magnetic signals are to be transferred.

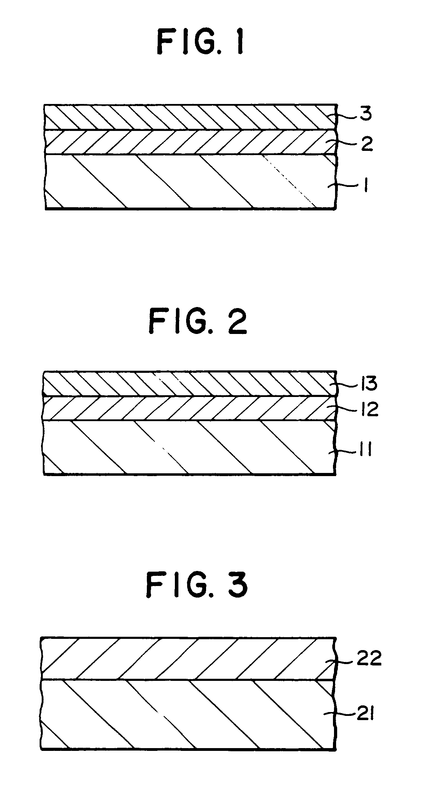

Referring now to Fig. 1, there is shown a magnetic recording medium used as the master medium. The master medium includes a nonmagnetic support (1) and a plurality of metal magnetic thin film (2), (3) formed on the support (1) as shown in the figure.

The metal magnetic thin films (2), (3) are formed by vacuum deposition of Co, Ni, Fe or alloys thereof several times which depend on the number of the films. In this instance, a double-layer structure is used. The metal magnetic thin films (2), (3) have, respectively, inclined columnar structures as schematically shown in the figure, because the incident direction of the vapor stream is changed from the side of a high incident angle, i.e. an angle relative to a normal direction of the nonmagnetic support (1), toward the side of a low incident angle. These films are so arranged that the inclined direction of the columnar structure of the metal magnetic thin film (2) is opposite to the inclined direction of the columnar structure of the metal magnetic thin film (3).

Since the inclined direction of the columnar structure of the metal magnetic thin film (2) and the inclined direction of the columnar structure of the metal magnetic thin film (3) are opposite to each other as set out above, the columnar structures are arranged symmetrically and thus the drawback of the phase shift is overcome, so that the error rate is suppressed.

It will be noted that although the master medium shown in Fig. 1 is a double-layered medium wherein two metal magnetic thin films are formed, a three-layered or multi-layered medium may be used without limitation. In the latter case, the inclined directions of the columnar structures of any adjacent metal magnetic thin films are arranged opposite to each other.

In the above-described master medium, the coercive force, Hc, should be high, e.g. to an extent of two times that of the slave medium, in order that recorded signals of the master medium are not erased during the course of the transfer. In addition, the magnetic flux density, Bm, should also be high in order to increase the transfer output. From this point of view, the master medium should preferably have a coercive force, Hc, of not less than 1400 (Oe) and a magnetic flux density, Bm, of not less than 4500 (G). If the coercive force, Hc, of the master medium is less than 1400 (Oe), the master medium will be de-magnetized by the influence of a lengthwise component of a transfer bias magnetic field. Moreover, when the magnetic flux density, Bm, is less than 4500 (G), it will becomes difficult to ensure a transfer output. Accordingly, the metal magnetic materials used to form the metal magnetic thin film should preferably be magnetic metal materials containing from 80 to 100 atomic percent of Co.

On the other hand, the slave medium used in the practice of the invention is a coating type of magnetic recording medium using a hexagonal system ferrite magnetic powder.

The hexagonal system ferrite magnetic powder used as the magnetic powder of the slave medium is a fine powder of a hexagonal system ferrite of the following general formula,

MO · n(Fe₂O₃) (1)

wherein M represents at least one of Ba, Sr and Ca and n is a value of 5 or 6. For controlling the coercive force, at least one of Co, Ti, Ni, Mn, Cu, Zn, In, Ge and Nb is added to substitute part of Fe of the hexagonal system ferrite with these elements. For instance, in a magnetoplumbite-type barium ferrite of the formula (1) wherein M is Ba, when part of Fe is substituted with the above element, the composition can be represented by the following general formula

BaO · n(Fe₁₋ₘXₘ)₂O₃ (2)

wherein X represents at least one of Co, Ti, Ni, Mn, Cu, Zn, In, Ge and Nb, m is a value of 0 to 0.2, and n is a value of 5 to 6.

The hexagonal system ferrite should preferably have an average size of not larger than 0.1 µ m and more preferably, am average size of 0.05 to 0.07 µ m.

The hexagonal system ferrite magnetic powder is kneaded along with a resin binder and an organic solvent to prepare a magnetic paint, which is subsequently applied onto a nonmagnetic support to form a magnetic layer. The resin binders and organic solvents may be those ordinarily used in the field of a coated type of magnetic recording medium. If necessary, lubricants, abrasives, dispersants, antistatic agents and the like may be added to the magnetic paint.

The master medium and the slave medium are used for magnetic transfer. The magnetic transfer technique may be any technique using, for example, a roller press system or an air press system as a transfer apparatus.

Since a vacuum deposited medium using a metal magnetic thin film as a magnetic layer is employed as a master medium and a ferrite-coated medium using a hexagonal system ferrite powder is used as a slave medium, a high transfer and reproduction output can be ensured in a short wavelength range and signals recorded in 8 mm wide video tapes or digital audio tapes can be magnetically transferred in an efficient manner.

The master medium is constituted of a plurality of metal magnetic thin films in such a way that the inclined directions of columnar structures of any adjacent metal magnetic thin films are opposite to each other, so that the problem of the master medium on its unsymmetry can be solved with a reduction in error rate such as by phase shift.

The present invention is described by way of examples.

### Example 1

In this example, the relation between the structure of a master medium and the error rate was checked.

Initially, a 10 µ m thick polyethylene terephthalate film was provided as a nonmagnetic support (1), on which a first metal magnetic thin film (2) and a second metal magnetic thin film (3) were formed on the nonmagnetic support (1) as shown in Fig. 1, thereby obtaining a sample tape. In this sample tape, the first metal magnetic thin film (2) and the second metal magnetic thin film (3) were arranged opposite to each other with respect to the inclined direction of the columnar structure.

The first metal magnetic thin film (2) and the second metal magnetic thin film (3) were, respectively, formed by vacuum deposition of Co in oxygen. The incident angles used in the respective vacuum deposition operations were 45° to 90°. The total thickness of the first metal magnetic thin film (2) and the second metal magnetic thin film (3) was 2000 angstroms. On the other hand, the nonmagnetic support (1) was formed with an undercoating prior to the formation of the metal magnetic thin films (2), (3) and was also formed with a back coat layer at a side opposite to the metal magnetic thin films (2), (3).

The thus obtained sample tape was provided as Example 1. For comparison, there were obtained a sample tape (Comparative Example 1) wherein as shown in Fig. 2, a first metal magnetic thin film (12) and a second metal magnetic thin film (13) were formed on a nonmagnetic support (11) in such a way that the columnar structures of the metal magnetic thin films (12), (13) were inclined in the same direction, and a sample tape (Comparative Example 2) wherein, as shown in Fig. 3, a single-layered metal magnetic thin film (22) was formed on a nonmagnetic support (21). The sample tapes of the comparative examples were controlled to have a total thickness of the metal magnetic thin film or films of 2000 angstroms.

These sample tapes were employed as a master tape for magnetic transfer in the R-DAT system and a block error rate (B.E.R.) of a slave tape was determined. The slave tape used for the determination was as shown below.

### Slave Tape

Coated-type barium ferrite tape

Thickness of the magnetic layer: 3.0 µm

Magnetic paint composition

| | |
|---|---|
| barium ferrite magnetic powder | 100 parts by weight |
| binder resin | 15 parts by weight |
| abrasive | 5 parts by weight |
| carbon | 2 parts by weight |
| methyl ethyl ketone | 110 parts by weight |
| toluene | 50 parts by weight |
| cyclohexanone | 50 parts by weight |

As a result, it was found that while the tape of Example 1 having a reversed double-layered structure had a block error rate of 1 x 10⁻³, those of Comparative Examples 1 and 2 were, respectively, 2 x 10⁻ and 1 x 10⁻, with a significant difference being recognized.

### Example 2

In this example, the influence of the magnetic characteristics of a master tape on the transfer output was determined.

The respective sample tapes (samples a - c) were made in the same manner as in Example 1, but the compositions of the respective metal magnetic thin films were changed to obtain appropriately controlled coercive forces, Hc, and magnetic flux densities, Bm, in the in-plane direction. It will be noted that sample d was for comparison and was a coated-type metal tape using a metal magnetic powder.

The characteristics of the respective sample tapes and the transfer outputs (initial and 100th values) of a slave medium used in combination with the sample tapes used as a master tape are shown in Table shown below.

The measurement of the transfer output was made using a 8 mm wide sample tape for transfer of video signals under the following magnetic field transfer conditions and under master tape recording conditions.

Magnetic field transfer conditions
- Transfer speed:: 4 m/second
- Transfer system:: air press system
- Transfer drum:: soft magnetic iron
- Bias head:: gap length, g, = 120 µm ferrite head
- Bias frequency:: 200 kHz
- Bias current:: 1.8 A_{P-P}

Master tape recording conditions
- Relative speed:: 3.113 m/second
- Carrier frequency:: 4.7 MHz
- Head gap:: 0.25 µm
- Type of head:: Sendust sputtered ferrite head
- Track width:: 20 µm

Recording current: optimum recording current at 4.7 MHz of the respective master tapes

**Table 1**

| | Characteristics of Master Tape | | | Transfer Output (dB) | |
|---|---|---|---|---|---|
| | Composition | Hc (Oe) | Bm (G) | Initial | 100th |
| Sample a | Co₈₀Ni₂₀ | 1200 | 4500 | -2.1 | -4.8 |
| Sample b | Co₉₀Ni₁₀ | 1500 | 5300 | -0.5 | -0.9 |
| Sample c | Co₁₀₀ | 1800 | 6300 | 0 | -0.5 |
| Sample d | - | 2000 | 3500 | -3.0 | -4.1 |

As will be apparent from the above Table, a higher coercive force, Hc, and a higher magnetic flux density, Bm, of the master tape results in a higher transfer output, so that more efficient transfer can be performed. With the metal tape (sample d), although the coercive force, Hc, is high, the magnetic flux density, Bm, is small. Thus, the transfer output is significantly lower than those of the samples b and c. It will be noted that the transfer output is a relative value to a case (0 dB) where the metal tape was subjected to self recording and reproduction. When the electromagnetic conversion characteristic is lowered by 3 dB or over as compared with the case of self recording and reproduction of the metal tape (i.e. the transfer output was -3dB or below in Table 1), the S/N characteristic is considerably degraded and such a tape cannot stand use as a soft tape.

## Claims

1. A magnetic transfer system for duplicating magnetic tape recording mediums which comprises, in combination, a master medium which has been magnetically encoded with record signals and which includes a nonmagnetic support (1) and a metal magnetic thin film formed on the nonmagnetic support by vacuum deposition of a magnetic metal material, and a slave medium which includes a nonmagnetic support and a magnetic film formed on the nonmagnetic support and comprised of a hexagonal system magnetic ferrite powder, **characterized in that** said metal magnetic thin film includes a plurality of metal magnetic thin films (2, 3) which have been so formed that columnar structures of any adjacent metal magnetic thin films are inclined in opposite directions.

2. The magnetic transfer system according to claim 1, wherein the magnetic metal material is a member selected from the group consisting of Co, Ni. Fe and alloys thereof.

3. The magnetic transfer system according to claim 2, wherein said magnetic metal material contains from 80 to 100 atomic percent of Co.

4. The magnetic transfer system according to claim 1, wherein said master medium has a coercive force of not less than 111,408 A/m (1400 Oe) and a magnetic flux density of not less than 0.45 T (4500 gausses).

5. The magnetic transfer system according to claim 1, wherein the hexagonal system magnetic ferrite powder is of the general formula, MO·n(Fe₂O₃), wherein M represents at least one of Ba, Sr and Ca and n is a value of 5 or 6.

6. The magnetic transfer system according to claim 5, wherein M is Ba.

7. The magnetic transfer system according to claim 5, wherein part of Fe in the ferrite powder is replaced by at least one element selected from the group consisting of Co, Ti, Ni, Mn, Cu, Zn, In, Ge and Nb.

8. The magnetic transfer system according to claim 5, wherein said hexagonal system magnetic ferrite powder is a magnetoplumbite barium ferrite of the following formula, BaO·n(Fe₁₋ₘXₘ)₂O₃, wherein X represents at least one of Co, Ti, Ni, Mn, Cu, Zn, In, Ge and Nb, m is a value of 0 to 0.2, and n is a value of 5 to 6.

9. The magnetic transfer system according to claim 5, wherein said hexagonal system magnetic ferrite powder has an average size of not larger than 0.1 µm.

## Patentansprüche

1. Magnetisches Übertragungssystem zum Duplizieren von Magnetband-Aufzeichnungsmedien, umfassend, in Kombination, ein Master-Medium, welches mit Aufzeichnungssignalen magnetisch kodiert worden ist und welches einen nichtmagnetischen Träger (1) und einen auf dem nichtmagnetischen Träger durch Vakuumabscheidung eines magnetischen Metallmaterials gebildeten, magnetischen Metalldünnfilm beinhaltet, sowie ein Slave-Medium, welches einen nichtmagnetischen Träger und einen magnetischen Film umfaßt, der auf dem nichtmagnetischen Träger gebildet ist und ein magnetisches Ferritpulver des hexagonalen Systems umfaßt, **dadurch gekennzeichnet**, daß der magnetische Metalldünnfilm eine Vielzahl von magnetischen Metalldünnfilmen (2, 3) umfaßt, welche in der Weise ausgebildet worden sind, daß säulenartige Strukturen benachbarter magnetischer Metalldünnfilme in entgegengesetzten Richtungen geneigt sind.

2. Magnetisches Übertragungssystem nach Anspruch 1, wobei das magnetische Metallmaterial ein aus der Co, Ni, Fe und Legierungen hiervon umfassenden Gruppe gewählter Vertreter ist.

3. Magnetisches Übertragungssystem nach Anspruch 2, wobei das magnetische Metallmaterial 80 bis 100 Atom-% Co enthält.

4. Magnetisches Übertragungssystem nach Anspruch 1, wobei das Master-Medium eine Koerzitivkraft von nicht weniger als 111 408 A/m (1400 Oe) und eine Magnetflußdichte von nicht weniger als 0,45 T (4500 Gauß) aufweist.

5. Magnetisches Übertragungssystem nach Anspruch 1, wobei das magnetische Ferritpulver des hexagonalen Systems der allgemeinen Formel MO·n(Fe₂O₃) entspricht, worin M mindestens eines aus Ba, Sr und Ca bedeutet und n den Wert 5 oder 6 hat.

6. Magnetisches Übertragungssystem nach Anspruch 5, worin M die Bedeutung Ba hat.

7. Magnetisches Übertragungssystem nach Anspruch 5, wobei ein Teil des Fe in dem Ferritpulver durch mindestens ein Element ersetzt ist, welches aus der Co, Ti, Ni, Mn, Cu, Zn, In, Ge und Nb umfassenden Gruppe gewählt ist.

8. Magnetisches Übertragungssystem nach Anspruch 5, wobei das magnetische Ferritpulver des hexagonalen Systems ein Magnetoplumbit-Bariumferrit der folgenden Formel BaO·n(Fe₁₋ₘXₘ)₂O₃ ist, worin X mindestens eines aus Co, Ti, Ni, Mn, Cu, Zn, In, Ge und Nb ist, m einen Wert vom 0 bis 0,2 hat und n einen Wert von 5 bis 6 hat.

9. Magnetisches Übertragungssystem nach Anspruch 5, wobei das magnetische Ferritpulver des hexagonalen Systems eine durchschnittliche Größe von nicht mehr als 0,1 µm aufweist.

## Revendications

1. Un système de transfert magnétique, pour reproduire des supports d'enregistrement à bande magnétique, qui comprend, en combinaison, un support d'enregistrement maître, qui a été magnétiquement encodé avec des signaux d'enregistrement et qui inclut un support (1) non magnétique et un film mince magnétique de métal, formé sur le support non magnétique par dépôt sous vide d'un matériau de métal magnétique, et un support d'enregistrement esclave, qui inclut un support non magnétique et un film magnétique, formé sur le support non magnétique et composé d'une poudre de ferrite magnétique de système hexagonal, caractérisé en ce que ledit film mince magnétique de métal inclut une pluralité de films (2, 3) minces magnétiques de métal, qui ont été ainsi formés, que des structures colonnaires de films minces magnétiques de métal adjacents quelconques sont inclinées dans des directions opposées.

2. Le système de transfert magnétique selon la revendication 1, dans lequel le matériau de métal magnétique est un élément sélectionné à partir du groupe constitué de Co, Mi, Fe et d'alliages de ceux-ci.

3. Le système de transfert magnétique selon la revendication 2, dans lequel ledit matériau de métal magnétique contient de 80 à 100 pour cent atomiques de Co.

4. Le système de transfert magnétique selon la revendication 1, dans lequel ledit support d'enregistrement maître a une force coercitive non moindre que 111 408 A/m (1400 Oe) et une densité de flux magnétique non moindre que 0,45 T (4500 gausses).

5. Le système de transfert magnétique selon la revendication 1, dans lequel la poudre de ferrite magnétique de système hexagonal est de la formule générale MO·n(Fe₂O₃), dans laquelle M représente au moins l'un de Ba, Sr et Ca et n est une valeur de 5 ou 6.

6. Le système de transfert magnétique selon la revendication 5, dans lequel M est Ba.

7. Le système de transfert magnétique selon la revendication 5, dans lequel une partie de Fe dans la poudre de ferrite est remplacée par au moins un élément sélectionné à partir du groupe constitué de Co, Ti, Ni, Mn, Cu, Zn, In, Ge et Nb.

8. Le système de transfert magnétique selon la revendication 5, dans lequel ladite poudre de ferrite magnétique de système hexagonal est un ferrite de baryum de magnétoplumbate de la formule suivante, BaO·n(Fe₁₋ₘXₘ)₂O₃, dans laquelle X représente au moins l'un de Co, Ti, Ni, Mn, Cu, Zn, In, Ge et Nb, m est une valeur de 0 à 0,2 et n est une valeur de 5 à 6.

9. Le système de transfert magnétique selon la revendication 5, dans lequel ladite poudre de ferrite magnétique de système hexagonal a une taille moyenne non plus grande que 0,1 µm.
